# EUROPÄISCHE PATENTSCHRIFT

(11) **EP 1 090 201 B1**
(45) Veröffentlichungstag und Bekanntmachung des Hinweises auf die Patenterteilung: **23.03.2005**
(21) Anmeldenummer: 99964454.5
(22) Anmeldetag: 24.12.1999
(51) Int. Cl.: E05F 15/16, H02K 11/00

(54) **ELEKTROMOTORISCHER ANTRIEB, INSBESONDERE FENSTERHEBERANTRIEB FÜR EIN KRAFTFAHRZEUG**
ELECTROMOTIVE DRIVE SYSTEM, ESPECIALLY A POWER WINDOW DRIVE SYSTEM FOR A MOTOR VEHICLE
ENTRAINEMENT PAR MOTEUR ELECTRIQUE, NOTAMMENT ENTRAINEMENT DE LEVE-VITRE D'UN VEHICULE

(30) Priorität: 15.04.1999 DE 19916958
(43) Veröffentlichungstag der Anmeldung: 11.04.2001
(73) Patentinhaber: ROBERT BOSCH GMBH, 70442 Stuttgart (DE)
(72) Erfinder: TASCH, Franz, D-76287 Rheinstetten (DE); WEBER, Matthias, D-76534 Baden-Baden (DE); DROLL, Bruno, D-77815 Buehl-Altschweier (DE); HAUSSECKER, Walter, D-77830 Bühlertal (DE); KARL, Martin, D-77887 Sasbachwalden (DE); HESSDOERFER, Robert, D-97753 Karlstadt-Stetten (DE); DREIER, Friedrich-Wilhelm, D-76547 Sinzheim (DE); KURZMANN, Rainer, D-77855 Achern (DE)
(86) Internationale Anmeldenummer: PCT/DE1999/004059
(87) Internationale Veröffentlichungsnummer: WO 2000/063515

(56) Entgegenhaltungen:
- EP-A- 0 538 495
- EP-A- 0 945 961
- DE-A- 4 233 156
- DE-A- 19 650 446
- DE-C- 19 839 333
- DE-U- 9 006 924

## Beschreibung

### Stand der Technik

Die Erfindung betrifft einen elektromotorischen Antrieb, insbesondere Fensterheberantrieb für ein Kraftfahrzeug, nach der Gattung des Hauptanspruchs. Elektromotorische Antriebe sind allgemein bekannt, wobei sie speziell im Kraftfahrzeugbereich zur Verstellung vielfältiger Fahrzeugkomponenten einsetzbar sind. Dies betrifft beispielsweise die Verstellung von Fahrzeugsitzen, von Fenstern und Schiebedächern oder auch die Verstellung von Spiegeln. Die eingesetzten Antriebe weisen in der Regel einen Elektromotor und ein diesem nachgeordnetes Getriebe, sowie eine Steuerungs- und Versorgungselektronik auf. Diese Elektronik ist auf einer Platine aufgebaut, welche in einem Elektronikgehäuse untergebracht ist.

Zur Bestimmung von Positionsparametern des Stellantriebs werden üblicherweise Sensoreinrichtungen verwendet, die an einem Sensorfinger angeordnet sind. Diese Sensoreinrichtungen stehen in Wechselwirkung mit der sich drehenden Motorankerwelle und zählen die Umdrehungen dieser Welle. Zu diesem Zweck ist es erforderlich, daß der Sensorfinger und die mit ihr verbundene Elektronik möglichst genau positionierbar und möglichst sicher fixierbar ist.

Der Montageaufwand der Elektronik ist aufgrund dieser beiden Erfordernisse beträchtlich, denn bei der bisherigen Montagetechnik wird die komplette Elektronik mit Sensoreinrichtung und eventuell im Bürstenträger an das Getriebegehäuse geschraubt oder geclipst. Die Elektronik ist getriebeseitig offen, so dass sich zusätzlich zum Positionierungs- bzw. Fixierungsproblem ein Dichtungsproblem ergibt.

Mit der G 90 06 924.2 U1 ist ein elektromotorischer Fensterheber mit einem an einem Getriebegehäuse angeordneten Elektronikgehäuse bekannt geworden. In das Elektronikgehäuse ist ein Einschubmodul, das eine Platine aufweist, mittels Führungsnuten einsteckbar. Dabei weist das Einschubmodul Führungsvorsprünge auf, die in entsprechenden, radial zur Ankerwelle angeordneten, Führungsnuten des Elektronikgehäuses gleitend geführt sind.

Die DE 198 39 333 C1 zeigt eine Antriebseinrichtung für ein in einem Kraftfahrzeug vorhandenes verstellbares Aggregat mit einer Motor-Getriebekombination und einer aufschiebbaren Steuereinheit. Die Steuereinheit weist einen profilierten Ansatz auf, der in radial zur Ankerwelle angeordnete Führungsmittel an der Motor-Getriebeeinheit einschiebbar ist.

### Vorteile der Erfindung

Der erfindungsgemäße elektromotorische Antrieb mit den Merkmalen des Hauptanspruchs hat den Vorteil, dass das Elektronikgehäuse sicher und weitgehend spielfrei mit dem Antrieb verbunden werden kann, die Montage lediglich durch Aufschieben des Elektronikgehäuses auf die Führungsschiene des Getriebegehäuses wesentlich vereinfacht und eine exakte Positionierung der mit der Elektronik verbundenen Sensoreinrichtung zur Bestimmung von Positionsparametern des Antriebs ermöglicht wird.

Durch die in den Unteransprüchen angegebenen Maßnahmen sind vorteilhafte Weiterbildungen des elektromotorischen Antriebs nach dem Hauptanspruch möglich.

So ist es von Vorteil, wenn die Führungsschiene, die entweder am Elektronikgehäuse oder am Getriebegehäuse angeordnet ist, sich im wesentlichen über die Breite des Elektronikgehäuses erstreckt. Dadurch erfolgt die Anbindung des Elektronikgehäuses an den Antrieb über die maximal mögliche Länge, die Elektronik wird optimal fixiert und ein an ihr angebundener Sensorfinger kann mit hoher Genauigkeit positioniert werden.

Sehr vorteilhaft ist, wenn die Führungsschiene rechteckförmig ausgebildet ist. Dadurch wird ein idealer Formschluss mit der Gegenführung und eine hohe Festigkeit des Elektronikgehäuses sowohl in Richtung parallel zur Motorankerwelle als auch in radialer Richtung erreicht.

Neben dieser optimalen Führung, die geringe Fertigungstoleranzen erlaubt, wird die Montage der Elektronik erheblich erleichtert, weil sie einfach nur über diesen Führungsmechanismus in den Antrieb eingeschoben werden muß.

Ein weiterer Vorteil liegt darin, daß das Elektronikgehäuse schon geführt wird, noch bevor der Sensorfinger in die Ausnehmung des Bürstenhalters eintaucht. Dies erleichtert die Montage der Elektronik zusätzlich, gleichzeitig wird die Gefahr von Beschädigungen an der Sensoreinrichtung minimiert.

In einer weiteren vorteilhaften Ausgestaltung des elektromotorischen Antriebs weist die Führungsschiene mindestens eine zentrale, längs der Führungsschiene verlaufende Vertiefung auf, in der eine ebenfalls zentrale, längs verlaufende Erhöhung der Gegenführung geführt wird. Diese Ausgestaltung erhöht die Genauigkeit der Führung noch zusätzlich.

Weiterhin ist von Vorteil, wenn das eingeschobene Elektronikgehäuse mit einem insbesondere schraubenartigen Sicherungsmittel gesichert werden kann. Dieses Sicherungsmittel ist vorzugsweise an dem dem Antrieb abgewandten Ende der Führungsschiene im Winkel von etwa 45° zur Motorankerwelle angeordnet. Dadurch kann nicht nur - wie bei herkömmlich angeordneten Sicherungsmitteln im Winkel von 90° zur Motorankerwelle - zusätzlich zur Fixierung in radialer Richtung zur Motorankerwellenachse das Spiel in dieser Richtung minimiert werden, sondern gleichzeitig auch eine spielfreie Befestigung in axialer Richtung ermöglicht werden.

Eine Weiterbildung der Erfindung sieht vor, daß das Elektronikgehäuse gegenüber einem Poltopf des Elektromotors mit einem am Elektronikgehäuse angeordneten Stützstift abgestützt ist. Dieser Stützstift wird von einer Ausnehmung, die beispielsweise im Bürstenhalter angeordnet ist, aufgenommen, und bietet eine zusätzliche Abstützmöglichkeit für das Elektronikgehäuse. Er entlastet daher den Führungsmechanismus und minimiert außerdem die Krafteinleitung in den Sensorfinger.

Weist dieser Stützstift eine Phase auf, dann wird die genaue Einführung des Stützstiftes in die Ausnehmung erleichtert.

Ein ganz genereller Vorteil des erfindungsgemäßen elektromotorischen Antriebs ist, daß die Elektronik ein völlig separates Teil darstellt, das universell auf verschiedene Antriebe aufgeschoben werden kann. Durch den vorteilhaften Führungsmechanismus wird ein hoher Grad an Flexibilität, erreicht, weil Antriebe und Elektroniken verschiedenster Art in prinzipiell beliebiger Weise miteinander kombinierbar sind. Mit geringem konstruktivem Aufwand erhält man bei wesentlich einfacherer Montage eine bessere Fixierung des Elektronikgehäuses am Antrieb und eine wesentlich genauere Positionierung des am Elektronikgehäuse angebundenen Sensorfingers an der Ankerwelle des Antriebs.

### Zeichnung

In der Zeichnung ist ein Ausführungsbeispiel eines erfindungsgemäßen elektromotorischen Antriebs dargestellt und in der nachfolgenden Beschreibung näher erläutert.

Es zeigen:
Fig. 1 eine schematische Darstellung eines fertigmontierten elektromotorischen Antriebs,
Fig. 2 den Antrieb aus Fig. 1 mit nichtmontierter Elektronik und
Fig. 3 einen Schnitt entlang der Linie I-I aus Fig. 1.

### Beschreibung des Ausführungsbeispiels

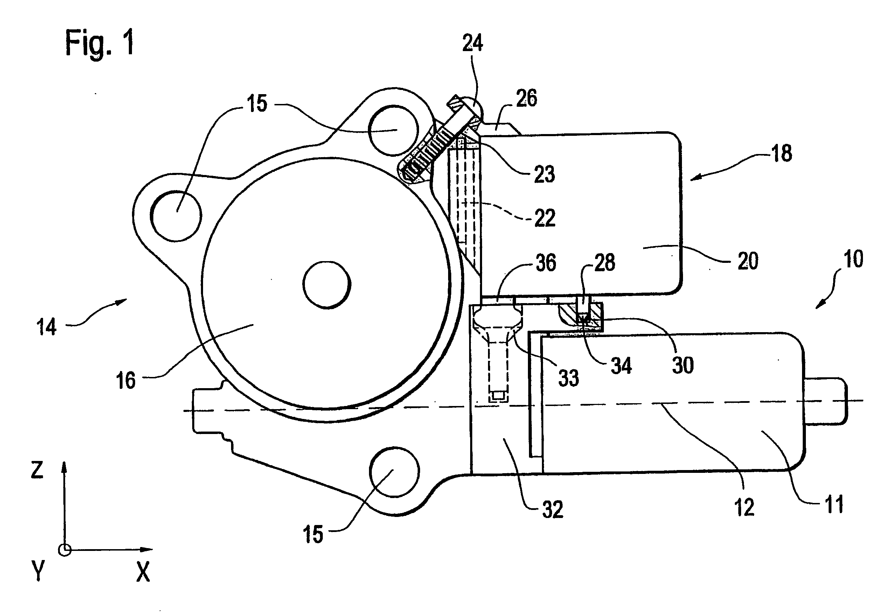

Das in Fig. 1 dargestellte Ausführungsbeispiel zeigt einen erfindungsgemäßen elektromotorischen Antrieb, insbesondere Fensterheberantrieb für ein Kraftfahrzeug, mit einem Elektromotor 10, der von einem Poltopf 11 umgeben ist, und eine Motorankerwelle 12 aufweist. Die Motorankerwelle 12 ist nur symbolisch durch eine gestrichelte Linie dargestellt, die deren Verlauf anzeigt. Der Antrieb beinhaltet weiterhin eine von einem Getriebegehäuse 16 umgebene Getriebeeinheit 14, die mit drei Bohrungen 15 zur Montage versehen ist. Der Elektromotor 10 ist über die Motorankerwelle 12 mit der Getriebeeinheit 14 wirkverbunden.

Zur Versorgung und Steuerung des elektromotorischen Antriebs ist eine Motorelektronik 18 vorgesehen, die in einem Elektronikgehäuse 20 untergebracht ist.

Das Elektronikgehäuse 20 ist an das Getriebegehäuse 16 über einen Führungsmechnismus 22, 23 fest angebunden und mit einem schraubenartigen Sicherungsmittel 24 in seiner Position fixiert. Das Sicherungsmittel 24 ist in einem Winkel von 45° bezüglich der Achse der Motorankerwelle an dem dem Antrieb abgewandten Ende des Führungsmechanismus 22, 23 in das Getriebegehäuse 16 geschraubt. Zur Verbindung mit dem Elektronikgehäuse 20 steckt es außerdem in einem Verbindungsteil 26, und sichert so das Elektronikgehäuse 20.

Ein Stützstift an der dem Poltopf 11 zugewandten Seite des Elektronikgehäuses 20 sorgt für eine zusätzliche Abstützung der Elektronik 18 gegenüber dem Poltopf 11. Dieser Stützstift 28 ragt in eine Ausnehmung 30 des Bürstenhalters 32, womit zusätzliche Kräfte in der eingezeichneten Z- und Y-Richtung aufgenommen werden.

Der Stützstift 28 weist eine Phase 34 auf, die das Einbringen des Stützstiftes 28 in die Ausnehmung 30 des Bürstenhalters 32 erleichtern.

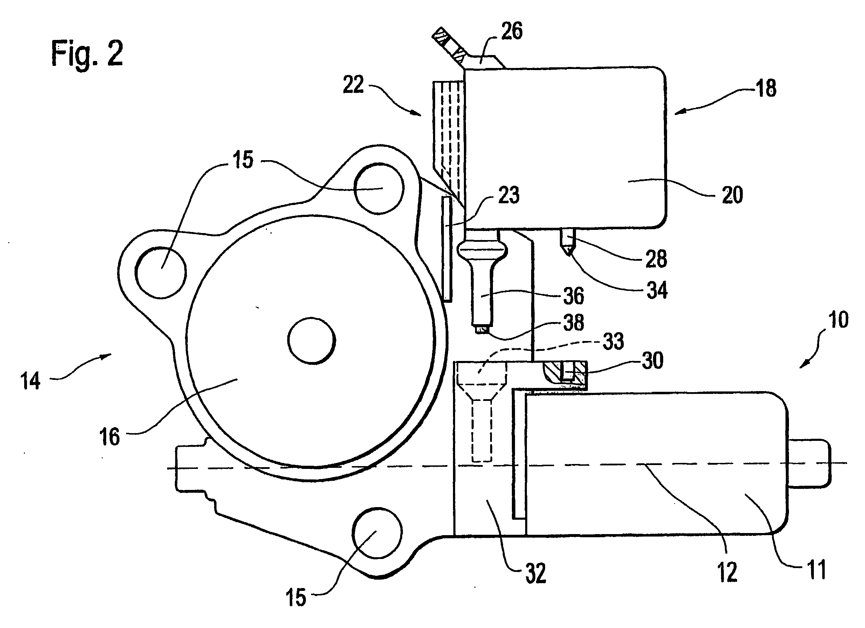

Weiterhin dargestellt ist ein Sensorfinger 36, der in eine zweite Ausnehmung 33 des Bürstenhalters 32 ragt. An diesem Sensorfinger 36 ist eine in Fig. 2 dargestellte Sensoreinrichtung 38 angeordnet, die dazu dient, Positionsdaten des Motors zu ermitteln.

Fig. 2 zeigt das Ausführungsbeispiel aus Fig. 1, allerdings ist hier die Elektronik 18 nicht montiert. Dies ermöglicht die Darstellung und nähere Beschreibung des Führungsmechanismus 22, 23, sowie der Sensoreinrichtung 38.

Genau wie in den folgenden Figuren sind in Fig. 2 gleiche Merkmale mit den gleichen Bezugszeichen versehen.

Das Ausführungsbeispiel, so wie es in Fig. 2 dargestellt ist, zeigt explizit den Führungsmechanismus 22, 23, mit dem die Motorelektronik 18 auf den Antrieb aufgeschoben wird. Sie besteht aus einer Führungsschiene 22, die am Elektronikgehäuse 20 angeordnet ist, und einer Gegenführung 23, die am Getriebegehäuse 16 angeordnet ist. Die Führungsschiene 22 und die Gegenführung 23 sind in ihrer Form aufeinander abgestimmt und ermöglichen eine exakte Führung des Elektronikgehäuses 20 sowie dessen sichere Fixierung.

In Fig. 2 ist außerdem der Sensorfinger 36 zu erkennen, der an seinem freien Ende mit einer Sensoreinrichtung 38 versehen ist, die in diesem Ausführungsbeispiel durch einen Hall-IC realisiert ist. In montierten Zustand wechselwirkt dieses Hall-IC mit einem nicht dargestellten Ringmagneten, der auf der Motorankerwelle 12 aufgebracht ist. Diese Wechselwirkung liefert Positionssignale zur Bestimmung der Position der Ankerwelle 12 bzw. des mit dem Antrieb verbundenen verstellbaren Teils.

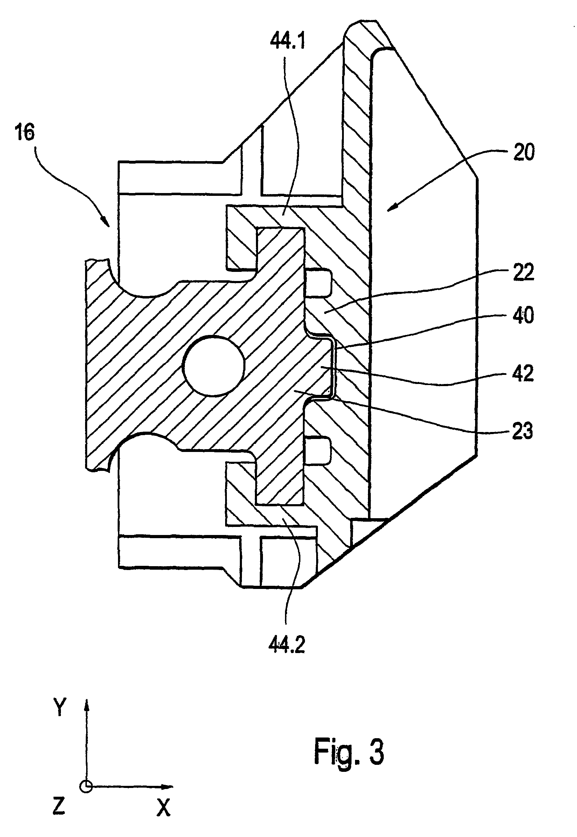

Fig. 3 zeigt die geometrische Form des Führungsmechanismus bestehend aus Führungsschiene 22 und Gegenführung 23. Die Führungsschiene 22 ist rechteckförmig ausgebildet, sie weist zwei L-förmige Stege 44.1 und 44.2 auf, welche die Gegenführung des Getriebegehäuses 16 teilweise umfassen. Optimaler Formschluß ist dann gewährleistet, wenn - wie in dem Ausführungsbeispiel dargestellt, die Gegenführung 23 im wesentlichen T-förmig ausgebildet ist. Dann ist das mit der Führungsschiene 23 verbundene Elektronikgehäuse 20 sowohl in der eingezeichneten X- als auch in der Y-Richtung ideal abgestützt.

Die Abstützung und Festigkeit des Elektronikgehäuses 20 wird zusätzlich durch eine Vertiefung 40 in der Führungsschiene 22 erhöht, in die eine Erhöhung 42 der Gegenführung 23 ragt.

Unabhängig von dem beschriebenen Ausführungsbeispiel sind prinzipiell auch andere geometrische Formen für den erfindungsgemäßen Führungsmechanismus denkbar, entscheidend ist einzig die sichere Führung des Elektronikgehäuses 20 sowie dessen optimale Anbindung an den elektromotorischen Antrieb, weiterhin die möglichst genaue Positionierbarkeit der Sensoreinrichtung 38.

## Patentansprüche

1. Elektromotorischer Antrieb, insbesondere Fensterheberantrieb für ein Kraftfahrzeug, mit einem Elektromotor (10), der eine Motorankerwelle (12) aufweist, die mit einer von einem Getriebegehäuse (16) umgebenen Getriebeeinheit (14) wirkverbunden ist, weiterhin einer von einem Elektronikgehäuse (20) umgebenen Motorelektronik (18), **dadurch gekennzeichnet,**
**dass** das Elektronikgehäuse (20) eine radial zur Motorankerwelle (12) verlaufende Führungsschiene (22) zum Einschub des Elektronikgehäuses (20) über eine am Getriebegehäuse (16) angeordnete Gegenführung (23) aufweist, und das Elektronikgehäuse (20) gegenüber einem Poltopf (11) des Elektromotors (10) mit einem am Elektronikgehäuse (20) angeordnetem Stützstift (28) abgestützt ist.

2. Elektromotorischer Antrieb nach Anspruch 1, **dadurch gekennzeichnet, dass** sich die Führungsschiene (22) und die Gegenführung (23) über die Breite (B) des Elektronikgehäuses (20) erstreckt.

3. Elektromotorischer Antrieb nach einem der Ansprüche 1 oder 2, **dadurch gekennzeichnet, dass** die Führungsschiene (22) rechteckförmig ausgebildet ist.

4. Elektromotorischer Antrieb nach einem der Ansprüche 1 bis 3, **dadurch gekennzeichnet, dass** die Führungsschiene (22) mindestens eine zentrale, längs der Führungsschiene (22) verlaufende Vertiefung (40) aufweist, in der eine ebenfalls zentrale, längs verlaufende Erhöhung (42) der Gegenführung (23) geführt wird.

5. Elektromotorischer Antrieb nach einem der Ansprüche 1 bis 4, **dadurch gekennzeichnet, dass** das eingeschobene Elektronikgehäuse (20) mit einem Sicherungsmittel (24) gesichert ist.

6. Elektromotorischer Antrieb nach Anspruch 5, **dadurch gekennzeichnet, dass** das Sicherungsmittel an dem der Motorankerwelle ( 12) abgewandten Ende der Führungsschiene (22) im Winkel von etwa 45° zur Motorankerwelle (12) angeordnet ist.

7. Elektromotorischer Antrieb nach Anspruch 1, **dadurch gekennzeichnet, dass** der Stützstift (28) in eine Ausnehmung (30) eines Bürstenhalters (32) ragt.

8. Elektromotorischer Antrieb nach Anspruch 1, **dadurch gekennzeichnet, dass** der Stützstift (28) eine Phase (34) aufweist.

## Claims

1. Electromotive drive, in particular a window winder drive for a motor vehicle, having an electric motor (10), which has a motor armature shaft (12) which is in interactive connection with a gear mechanism unit (14) surrounded by a gear mechanism housing (16), also having motor electronics (18) surrounded by an electronics housing (20), **characterized in that** the electronics housing (20) has a guide rail (22) running radially with respect to the motor armature shaft (12) for the purpose of inserting the electronics housing (20) by means of an opposing guide (23) arranged on the gear mechanism housing (16), and the electronics housing (20) is supported with respect to a pole pot (11) of the electric motor (10) by a supporting pin (28) arranged on the electronics housing (20).

2. Electromotive drive according to Claim 1, **characterized in that** the guide rail (22) and the opposing guide (23) extend over the width (B) of the electronics housing (20).

3. Electromotive drive according to either of Claims 1 or 2, **characterized in that** the guide rail (22) is rectangular.

4. Electromotive drive according to one of Claims 1 to 3, **characterized in that** the guide rail (22) has at least one central depression (40) running along the guide rail (22), a likewise central, longitudinally running elevation (42) of the opposing guide (23) being guided in said depression (40).

5. Electromotive drive according to one of Claims 1 to 4, **characterized in that** the inserted electronics housing (20) is secured using securing means (24).

6. Electromotive drive according to Claim 5, **characterized in that** the securing means is arranged at that end of the guide rail (22) which is remote from the motor armature shaft (12) at an angle of approximately 45° with respect to the motor armature shaft (12).

7. Electromotive drive according to Claim 1, **characterized in that** the supporting pin (28) protrudes into a recess (30) in a brush holder (32).

8. Electromotive drive according to Claim 1, **characterized in that** the supporting pin (28) has a bevel (34).

## Revendications

1. Entraînement par moteur électrique, en particulier entraînement de lève-vitre pour un véhicule automobile, équipé
d'un moteur électrique (10) comportant un arbre d'induit de moteur (12) en liaison active avec un réducteur (14) entouré par un boîtier de protection (16),
et en outre d'une électronique de moteur (18) entourée par un boîtier d'électronique (20),
**caractérisé en ce que**
le boîtier d'électronique (20) présente un rail de guidage (22) qui s'étend radialement par rapport à l'arbre d'induit de moteur (12) et qui sert à insérer le boîtier d'électronique (20) sur un contre-guide (23) disposé sur le boîtier de protection (16), et
et le boîtier d'électronique (20) est soutenu en face d'un stator (11) du moteur électrique (10) à l'aide d'une broche de soutien (28) disposée sur le boîtier d'électronique (20).

2. Entraînement par moteur électrique selon la revendication 1,
**caractérisé en ce que**
le rail de guidage (22) et le contre-guide (23) s'étendent sur la largeur (B) du boîtier d'électronique (20).

3. Entraînement par moteur électrique selon l'une des revendications 1 ou 2,
**caractérisé en ce que**
le rail de guidage (22) est rectangulaire.

4. Entraînement par moteur électrique selon l'une des revendications 1 à 3,
**caractérisé en ce que**
le rail de guidage (22) présente au moins une cavité (40) centrale qui s'étend le long du rail de guidage (22) et dans laquelle est guidée une surélévation (42) également centrale - du contre-guide (23) - qui s'étend en longueur.

5. Entraînement par moteur électrique selon l'une des revendications 1 à 4,
**caractérisé en ce que**
le boîtier d'électronique (20) une fois inséré est maintenu par un moyen de maintien (24).

6. Entraînement par moteur électrique selon la revendication 5,
**caractérisé en ce que**
le moyen de maintien est disposé à l'extrémité du rail de guidage (22) opposée à l'arbre d'induit de moteur (12) selon un angle d'environ 45° par rapport à l'arbre d'induit de moteur (12).

7. Entraînement par moteur électrique selon la revendication 1,
**caractérisé en ce que**
la broche de soutien (28) dépasse dans un creux (30) d'un porte-balais (32).

8. Entraînement par moteur électrique selon la revendication 1,
**caractérisé en ce que**
la broche de soutien (28) présente une borne de phase (34).
